# EUROPÄISCHE PATENTSCHRIFT

(11) **EP 1 543 469 B1**
(45) Veröffentlichungstag und Bekanntmachung des Hinweises auf die Patenterteilung: **02.11.2006**
(21) Anmeldenummer: 03750331.5
(22) Anmeldetag: 10.09.2003
(51) Int. Cl.: G06K 7/00, H04L 1/16

(54) **VERFAHREN ZUR GESICHERTEN ÜBERTRAGUNG VON DATEN, INSBESONDERE ZUR ÜBERTRAGUNG ÜBER EINE LUFTSCHNITTSTELLE**
METHOD FOR SECURELY TRANSMITTING DATA, PARTICULARLY FOR TRANSMISSION VIA AN AIR INTERFACE
PROCÉDÉ DE TRANSMISSION SECURISÉ DE DONNÉES, EN PARTICULIER DE TRANSMISSION VIA UNE INTERFACE AÉRIENNE

(30) Priorität: 23.09.2002 DE 10244135
(43) Veröffentlichungstag der Anmeldung: 22.06.2005
(73) Patentinhaber: SIEMENS AKTIENGESELLSCHAFT, 80333 München (DE)
(72) Erfinder: CUYLEN, Michael, 90513 Zirndorf (DE)
(86) Internationale Anmeldenummer: PCT/DE2003/003003
(87) Internationale Veröffentlichungsnummer: WO 2004/029856

(56) Entgegenhaltungen:
- EP-A- 0 680 002
- WO-A-02/27642
- BENELLI G ET AL: "A coding and retransmission protocol for mobile radio data transmission" VEHICULAR TECHNOLOGY CONFERENCE, 1999. VTC 1999 - FALL. IEEE VTS 50TH AMSTERDAM, NETHERLANDS 19-22 SEPT. 1999, PISCATAWAY, NJ, USA,IEEE, US, 19. September 1999 (1999-09-19), Seiten 2505-2509, XP010353365 ISBN: 0-7803-5435-4
- "identification cards - contactless integrated circuit(s) cards - vicinity cards part 2: air interface and initialization" ISO/IEC 15693-2, XX, XX, 1. Juli 2001 (2001-07-01), Seiten 1-19, XP002246548 in der Anmeldung erwähnt

## Beschreibung

Die Erfindung bezieht sich auf ein Verfahren zur gesicherten Übertragung von Daten, insbesondere von längeren Datensequenzen, deren Kodierung durch eine Folge aus einer vorgebbaren Anzahl an Ein- und Auswerten repräsentiert wird. Die Erfindung bezieht sich zudem auf einen mobilen Datenspeicher, auf ein Schreib-/Lesegerät zur Durchführung des Verfahrens sowie auf ein Identifikationssystem mit dem Schreib-/Lesegerät und mindestens einem mobilen Datenspeicher.

Aus der WO 02/27642 ist ein Verfahren zur Kodierung von Datenpaketen mit mindestens einem Steuerkommando und einem Datenbyte bekannt. Hierbei werden die Datenpakete in Sequenzen von Steuer- und/oder Datenzeitblöcken mit jeweils einer vorgegebenen Anzahl von Zeitsegmenten aufgeteilt, wobei diese einen Ein- oder Auswert annehmen können. Es werden in die Zeitsegmente eines Steuerzeitblockes zumindest ein Steuerkommando und in die Zeitsegmente von zwei Datenzeitblöcken je ein Datenbyte kodiert, wobei jedem Zeitsegment mit einem Auswert mindestens ein Einwert folgt. Das Verfahren kann vorteilhaft bei Identifikationssystemen, bei mobilen Datenträgern und bei Schreib-/Lesegeräten eingesetzt werden. Hiermit ist der Vorteil verbunden, dass eine höhere Datenrate zur Übertragung von Datenpaketen erreicht wird.

Kontaktlose Identifikationssysteme arbeiten auf Basis von berührungslosen Übertragungstechniken. Diese können z.B. auf elektromagnetische Weise, mittels Infrarot oder Ultraschall beruhen. Derartige Systeme werden beispielsweise zur Identifikation von Personen oder von bewegten Gütern eingesetzt. Die notwendigen Daten werden dazu von einem Schreib-/Lesegerät über eine berührungslose Datenübertragungsstrecke übertragen, wie z.B. über eine Luftschnittstelle zu einem mobilen Datenspeicher und zurück. Die berührungslose Identifikationstechnik gestattet auch die Erfassung der Daten z.B. während einer Vorbeibewegung des mobilen Datenspeichers an einem Schreib-/Lesegerät. Damit die mobilen Datenspeicher zeitlich unbegrenzt eingesetzt werden können, wird bei diesen auf die Integration von Energiespeichern, wie z.B. Batterien, verzichtet. Die notwendige elektrische Energie wird dabei extern, d.h. einem vom Schreib-/Lesegerät stammenden elektrischen oder magnetischen Feld, kontaktlos entnommen.

Zur Kommunikation eines Schreib-/Lesegeräts mit derartigen mobilen Datenspeichern sind daher geeignete Übertragungs- und Kodierungsverfahren notwendig, welche sowohl eine energetische Versorgung der Elektronik auf dem mobilen Datenspeicher als auch die Einhaltung von funktechnischen Auflagen sicherstellen. Zudem sind zur Übertragung von Daten in der Regel nur bestimmte Frequenzbänder freigegeben, wie z.B. die ISM-Frequenzbänder (Industrial, Scientifc & Medical) für industrielle, wissenschaftliche und medizinische Anwendungen. Zur Sicherstellung einer durchgehenden Energieversorgung wird eine mit den zu sendenden Daten modulierte Trägerfrequenz nur für ein maximales Zeitintervall ausgeschaltet. Innerhalb dieser Zeit muss ein zuvor im mobilen Datenspeicher aufgeladener Energiespeicher die Energieversorgung überbrücken können. Umgekehrt erfolgt die Datenübertragung vom mobilen Datenspeicher zum Schreib-/Lesegerät mittels einer Belastungsmodulation. Die Belastungsmodulation kann für ein maximales Zeitintervall kontinuierlich oder alternativ mit einem Hilfsträger trägerfrequenzmoduliert erfolgen. Solche Verfahren sind z.B. nach der Norm ISO/IEC 15693 Part 2 "Air Interface and Initialization" oder nach der Norm ISO/IEC 14443 als Zeitschlitzverfahren zum Betrieb in einem ISM-Frequenzband bekannt.

Eine Datenübertragung zwischen Schreib-/Lesegerät und mobilem Datenspeicher kann jedoch durch Störungen nachteilig beeinflusst werden. Bei einer Datenübertragung auf beispielhaft induktiv gekoppeltem Wege können dies elektromagnetische Störquellen, wie z.B. Motoren, Magnetventile, Schweißroboter etc., sein, welche in der näheren Umgebung betrieben werden. Dadurch kann es zu einer fehlerhaften Datenübertragung kommen.

Zur Reduzierung dieses Problems sind geeignete Sicherungsverfahren bekannt, wie z.B. das Ermitteln und Anhängen eines CRC-Wortes (Cyclic Redundancy Check) oder eines Paritybits an das Ende der zu übertragenden Daten oder Datensequenz.

Bei Verwendung eines Paritybits zur gesicherten Übertragung von Daten ist dagegen der rechnerische Aufwand im Vergleich zur Ermittlung eines CRC-Wortes äußerst gering. Folglich ist die Fehlererkennungswahrscheinlichkeit für eine gestörte Datensequenz auch nicht sehr hoch. Sind bei einer Datenübertragung z.B. zwei Zeitschlitze innerhalb einer übertragenen Sequenz gestört, so ändert sich der Wert des Paritybits nicht, wenn die Werte der Zeitschlitze komplementäre Werte aufweisen.

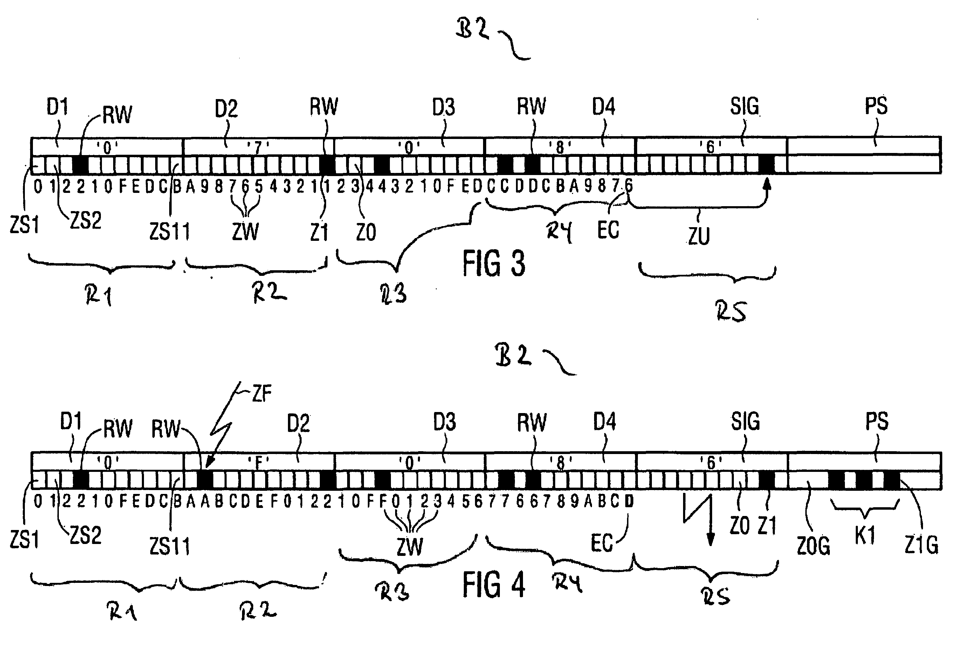

In der veröffentlichten DE 102 14 188 A1 ist zur Lösung dieses Problems ein Verfahren zur gesicherten Übertragung von Daten, deren Kodierung jeweils durch eine Folge aus einer vorgebbaren Anzahl an Ein- und Auswerten repräsentiert wird, beschrieben. Dabei wird ein die vorgebbare Anzahl repräsentierender Zählwert dadurch gebildet, dass nach jedem Einwert die Zählrichtung gewechselt und bei jedem Auswert der Zählwert inkrementiert oder dekrementiert wird. Es wird dann eine Fehlerinformation erzeugt, falls ein erster Endwert, welcher als kodierte Folge des Zählwertes mit den Daten übertragen wird, von einem zweiten Endwert, welcher wie der Zählwert aus der übertragenen Folge gebildet wird, verschieden ist. Im Beispiel der Figur 3 wird dies nochmals kurz erläutert.

Das in der oben genannten Patentanmeldung beschriebene Verfahren ist vorteilhaft für kurze Datensequenzen. Eine Störung kann dabei mit Hilfe der kodierten Übertragung und der partiellen Signatur gut erkannt werden. Mit diesem Verfahren ist eine kodierte Übertragung von einigen Bytes an Dateninformation möglich.

Für längere Datensequenzen, d.h. mit zunehmender Zahl von übertragenen Zeitschlitzen, erhöht sich die Wahrscheinlichkeit eines Fehlers in der übertragenen Datensequenz. Ab einer Länge von kodiert zu übertragenen Daten von ca. 20 Byte ist dieses Verfahren dann nicht mehr vorteilhaft.

Damit ist das Problem verbunden, dass die Anwendung des vorangegangenen Verfahrens in Identifikationssystemen, bestehend aus mobilen Datenspeichern und Schreib-/Lesegeräten, auf kodiert zu übertragene Daten von wenigen Bytes beschränkt bleibt.

Es ist somit die Aufgabe der Erfindung, ein Verfahren, einen mobilen Datenspeicher, ein Schreib-/Lesegerät sowie ein Identifikationssystem mit mobilen Datenspeichern und einem Schreib-/Lesegerät anzugeben, welche eine gesicherte und effektive Übertragung von längeren Datensequenzen erlauben.

Die Aufgabe wird gelöst mit einem Verfahren zur gesicherten Übertragung von Datenpaketen, wobei Datenpakete in je eine Folge von Datenblöcken und Datenblöcke in je eine Folge von Daten eingeteilt werden, wobei die Kodierung der Daten durch je eine Folge aus einer vorgebbaren Anzahl an Ein- und Auswerten repräsentiert wird. Es wird je ein Sicherungsdatum aus den vorangegangenen Daten und je ein Sicherungsblock aus den vorangegangenen Datenblöcken gebildet. Es erfolgt dann eine erste Datenanforderung, falls das mit den Daten übertragene Sicherungsdatum von einem beim Datenempfang auf gleiche Weise gebildeten Sicherungsdatum verschieden ist. Eine zweite Datenanforderung erfolgt zudem, falls der mit den Datenblöcken übertragene Sicherungsblock von einem beim Datenempfang auf gleiche Weise gebildeten Sicherungsblock verschieden ist.

Die Aufgabe wird weiterhin gelöst mit einem mobilen Datenspeicher sowie einem Schreib-/Lesegerät mit Mitteln zur Durchführung des erfindungsgemäßen Verfahrens. Schließlich wird die Erfindung mit einem Identifikationssystem mit dem Schreib-/Lesegerät und zumindest einem mobilen Datenspeicher gelöst. Vorteilhafte weitere Ausgestaltungen des Verfahrens und der Vorrichtungen sind in den Unteransprüchen enthalten.

Damit ist der Vorteil verbunden, dass ein Fehler in übertragenen kurzen Datensequenzen mit geringem Rechenaufwand erkannt werden kann.

Es kann vorteilhaft unmittelbar eine Wiederholung der fehlerhaften kurzen Datensequenzen veranlasst werden kann, ohne das Übertragungsende der längeren Datensequenz mit dem "sichereren" CRC-Block abwarten zu müssen.

Ein weiterer Vorteil ist, dass ein in einer längeren Datensequenz übertragener Fehler am Ende mit hoher Sicherheit erkannt wird, indem nur hier ein Fehlererkennungsverfahren mit hoher Sicherheit verwendet wird, und unmittelbar dann eine Wiederholung der gesamten längeren Datensequenz veranlasst wird.

Die Erfindung wird an Hand der nachfolgenden Figuren näher erläutert. Dabei zeigt
- FIG 1: ein Beispiel für ein Identifikationssystem, welches ein Schreib-/Lesegerät und einen mobilen Datenspeicher mit je einer Kodiereinrichtung zur Durchführung des erfindungsgemäßen Verfahrens zum berührungslosen Austausch von Daten aufweist,
- FIG 2: einen beispielhaften Aufbau eines Datenpakets gemäß der Erfindung,
- FIG 3: eine beispielhafte Übertragung eines Datenblocks mit vier Daten, einem Sicherungsdatum und einem Pausenblock gemäß der Erfindung, wobei die Kodierung der Daten durch eine Folge von Ein- und Auswerten repräsentiert wird,
- FIG 4: die beispielhafte Übertragung eines Datenblocks gemäß Figur 3 in einem Fehlerfall und eine erste Datenanforderung für eine Wiederholung des letzten Datenblocks gemäß der Erfindung und
- FIG 5: eine beispielhafte fehlerhafte Übertragung eines Datenpaketes und eine zweite Datenanforderung für eine Wiederholung aller Datenblöcke gemäß der Erfindung.

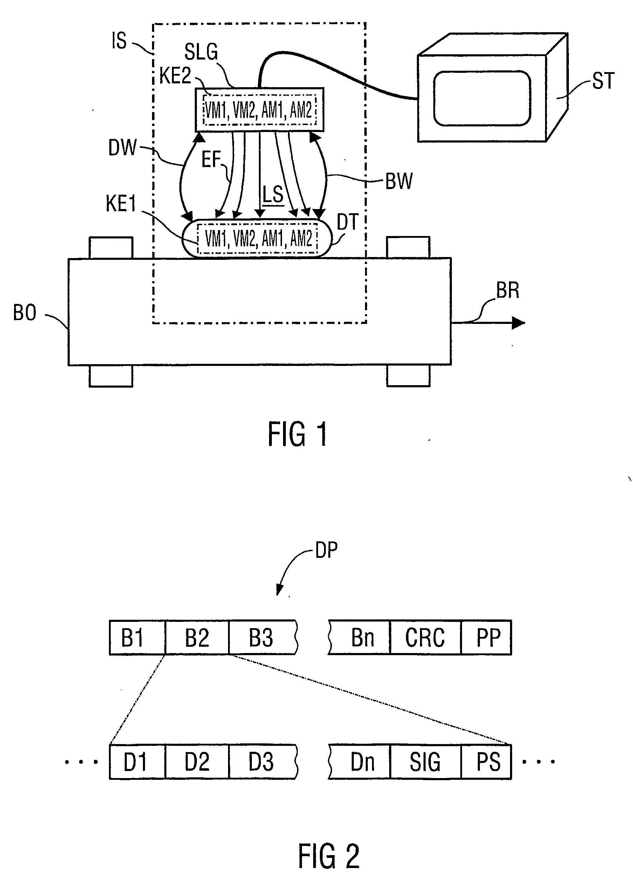

FIG 1 zeigt beispielhaft ein Identifikationssystem IS, welches ein Schreib-/Lesegerät SLG und einen mobilen Datenspeicher DT mit je einer Kodiereinrichtung KE1,KE2 zur Durchführung des erfindungsgemäßen Verfahrens aufweist. Der mobile Datenspeicher DT ist dabei an einem beweglichen Objekt BO angebracht, wie z.B. an einem Transportmittel, welches sich in einer Bewegungsrichtung BR relativ zum Schreib-/Lesegerät SLG bewegt. Im Beispiel der Figur 1 werden Daten über eine berührungslose Datenübertragungsstrecke LS, wie z.B. eine Luftschnittstelle, übertragen. Im rechten oberen Teil der Figur 1 ist ein beispielhafter Steuerrechner ST dargestellt, der mit dem Schreib-/Lesegerät SLG über eine Schnittstelle in Verbindung steht. Über diese werden die Daten zwischen Steuerrechner ST und Schreib-/Lesegerät SLG z.B. zur Datenerfassung ausgetauscht. Zudem weisen die jeweiligen Kodiereinrichtungen KE1,KE2 zur Durchführung des erfindungsgemäßen Verfahrens beispielhaft Vergleichsmittel VM1,VM2 sowie Abfragemittel AM1,AM2 auf. Die Vergleichsmittel VM1,VM2 dienen dabei der Erkennung eines Übertragungsfehlers und der Erzeugung einer entsprechenden Datenanforderung DW,BW zur Wiederholung der Daten. Die Abfragemittel AM1,AM2 bewirken die wiederholte Übertragung der vorhergehenden Daten D1-Dn bzw. Datenblöcke B1-Bn an die entsprechende Gegenstelle DT,SLG, falls eine Datenanforderung DW,BW anliegt.

Es kann dann vorteilhaft unmittelbar eine Wiederholung der fehlerhaft übertragenen Daten veranlasst werden kann, ohne das Übertragungsende einer längeren Datensequenz abwarten zu müssen.

Über die beispielhafte Luftschnittstelle LS erfolgt zugleich die Versorgung des mobilen Datenspeichers DT mit Energie. Zur Veranschaulichung des Energieflusses von Schreib-/Lesegerät SLG zu mobilem Datenspeicher DT sind Energieflusslinien EF eingezeichnet. Die Träger der notwendigen Energie können beispielsweise elektrische oder magnetische Felder sein.

FIG 2 zeigt einen beispielhaften Aufbau eines Datenpaketes DP gemäß der Erfindung. Das Datenpaket DP ist eingeteilt in Datenblöcke B1-Bn mit einer vorgebbaren Anzahl. Den jeweiligen Datenblöcken B1-Bn folgt ein Sicherungsblock CRC, welcher erfindungsgemäß aus den vorausgegangenen Datenblöcken B1-Bn rechnerisch gebildet wird. Dies kann z.B. über das bekannte Cyclic-Redundancy-Check-Vefahren (CRC) erfolgen. Ein derartiges algorithmisches Verfahren weist eine sehr hohe Fehlererkennungswahrscheinlichkeit auf. Wie in der Figur 2 bereits dargestellt, weist erfindungsgemäß der Sicherungsblock CRC die gleiche Länge wie ein Datenblock B1-Bn auf. Weiterhin wird erfindungsgemäß jeder Datenblock B1-Bn durch einen zweiten Pausenblock PP abgeschlossen. Auch dies ist bereits im Beispiel der Figur 2 dargestellt.

Erfindungsgemäß ist nun jeder Datenblock B1-Bn in eine Folge von Daten D1-Dn eingeteilt. Im Beispiel der vorliegenden Figur 2 ist dazu die Einteilung des Datenblocks B2 dargestellt. Den Daten D1-Dn folgt erfindungsgemäß ein Sicherungsdatum SIG, welches aus den vorangegangenen Daten D1-Dn gebildet wird. Erfindungsgemäß kann dabei das Sicherungsdatum SIG in gleicher Weise kodiert sein wie ein Datum D1-Dn. Vorzugsweise kann ein Datum D1-Dn bzw. das Sicherungsdatum SIG ein Nibble mit einer Wertigkeit von 16 sein, wobei zwei Nibble ein in der Datentechnik übliches Byte kodieren. Die entsprechende Darstellung für ein Nibble erfolgt dabei in hexadezimaler Schreibweise von ,0' ..,F'. Weiterhin folgt erfindungsgemäß den Daten D1-Dn ein erster Pausenblock PS, der gemäß einer weiteren Ausgestaltung der Erfindung die gleiche Länge wie ein zweiter Pausenblock PP aufweisen kann. Dies ist bereits im Beispiel der Figur 2 dargestellt.

Damit ist der Vorteil verbunden, dass ein in einer längeren Datensequenz DP übertragener Fehler am Ende mit sehr hoher Sicherheit erkannt wird, indem nur hier ein Fehlererkennungsverfahren mit hoher Sicherheit verwendet wird, und unmittelbar dann eine Wiederholung der gesamten längeren Datensequenz DP veranlasst wird.

Für kurze Datensequenzen B1-Bn kann vorteilhaft ein übertragener Fehler mit geringem Rechenaufwand erkannt werden.

FIG 3 zeigt eine beispielhafte Übertragung eines Datenblocks B2 mit vier Daten D1-D4, einem Sicherungsdatum SIG und einem ersten Pausenblock PS gemäß der Erfindung. Die Kodierung '0'-'F' der Daten D1-D4 bzw. von beispielhaften Nibblen wird durch eine Folge von Ein- und Auswerten Z1,Z0 repräsentiert. Jedes Datum D1-Dn wird in einen Zeitschlitzrahmen R1-Rn strukturiert, wobei ein Zeitschlitzrahmen R1-Rn die Folge von Ein- und Auswerten Z1,Z0 aufweist. Der Sequenz von Zeitschlitzrahmen R1-Rn folgt ein im Aufbau entsprechender Signaturrahmen RS, welcher das Sicherungsdatum SIG in gleich kodierter Weise '0'-'F' enthält. Dies ist bereits im Beispiel der Figur 3 dargestellt, wobei die Kodierung '6' des Sicherungsdatums SIG durch den Signaturrahmen RS repräsentiert wird. Zudem wurde im Beispiel der Figur 3 jeder Zeitschlitzrahmen R1-R4 sowie der Sicherungsrahmen RS in 11 Zeitschlitze ZS1-ZS11 beispielhaft unterteilt.

Zur gesicherten Übertragung der Daten D1-D4 wird nach jedem Einwert Z1 die Zählrichtung RW gewechselt und bei jedem Auswert Z0 ein Zählwert ZW inkrementiert oder dekrementiert. Im Beispiel der Figur 3 wurde als erster Zählwert ZW im Zeitschlitzrahmen R1 für den ersten Zeitschlitz ZS1 der Zählwert ZW '0' und als Startzählrichtung RW die Vorwärtszählrichtung gewählt. Die Zählwerte ZW bewegen sich dabei zyklisch in einem hexadezimalen Wertebereich '0'-'F'. Am Ende der Zählwertbildung wird schließlich der erste Endwert EC mit dem Wert '6' entsprechend der zuvor festgelegten Kodierung '0'-'F' in die Zeitschlitze ZS1-ZS11 des Sicherungsrahmens SIG durch Zuordnung ZU eingeschrieben.

Auf der Empfängerseite als Gegenstelle DT,SLG erfolgt die Zählwertbildung in gleicher Weise, so dass das kodiert übertragene Sicherungsdatum SIG mit dem ermittelten kodierten Zählwert verglichen werden kann.

FIG 4 zeigt die beispielhafte Übertragung eines Datenblocks B2 gemäß Figur 3 in einem Fehlerfall ZF und eine erste Datenanforderung DW für eine Wiederholung des letzten Datenblocks B2 gemäß der Erfindung. Im Vergleich zum Beispiel in FIG 3 verursacht eine Übertragungsstörung ZF einen Zählfehler, wobei das kodiert übertragene Sicherungsdatum SIG nicht mit dem ermittelten kodierten Zählwert übereinstimmt. Der zuletzt ermittelte Endwert EC weist im vorliegenden Beispiel den Wert 'D' anstelle des Wertes '6' auf.

Erfindungsgemäß wird unmittelbar im folgenden ersten Pausenblock PS von der empfangenden Gegenstelle DT,SLG eine charakteristische Datenwiederholungsfolge K1 aus einer vorgebbaren Anzahl an Ein- und Auswerten Z0G,Z1G für eine erste Datenanforderung DW zur vorteilhaft unmittelbaren Wiederholung der vorangegangenen Daten D1-Dn kodiert ausgegeben bzw. gesendet. Im Beispiel der Figur 4 weist die Datenwiederholungsfolge K1 eine dreifach hintereinander folgende Z1G-/Z0G-Folge auf, welche vorteilhaft keiner vorhergehenden Datenkodierung entspricht und somit für die empfangende Gegenstelle DT,SLG einzigartig ist.

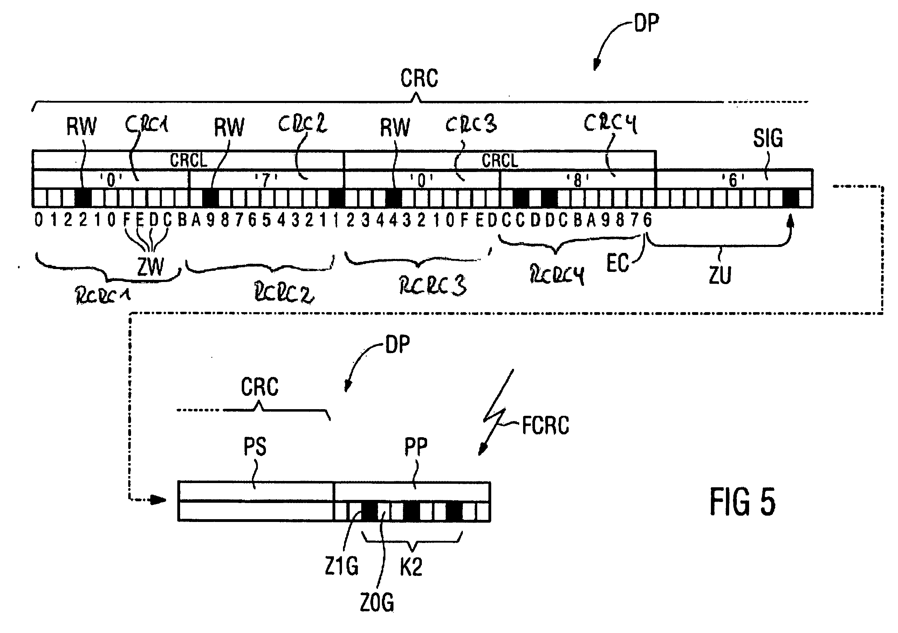

FIG 5 zeigt eine beispielhafte fehlerhafte Übertragung FCRC eines Datenpaketes DP und eine unmittelbar folgende zweite Datenanforderung BW für eine Wiederholung aller Datenblöcke B1-Bn gemäß der Erfindung. Wie eingangs beschrieben, folgt den übertragenen Datenblöcken B1-Bn ein Sicherungsblock CRC, welcher zur vereinfachten datentechnischen Verarbeitung wie ein Datenblock B1-Bn kodiert ist. Im Beispiel von FIG 5 weist der Sicherungsblock CRC gemäß dem Beispiel in Figur 2 und Figur 3 den Umfang von vier CRC-Daten CRC1-CRC4 auf, wobei jedes CRC-Datum CRC1-CRC4 ein Byte kodiert. Je zwei Byte bilden dabei beispielhaft das Upper Byte CRCH bzw. Lower Byte CRCL eines CRC-Wortes. Jedem CRC-Datum CRC1-CRC4 ist ein CRC-Sicherungsrahmen RCRC1-RCRC4 zur Kodierung in Zeitschlitzen Z1,Z0 zugeordnet.

Erfindungsgemäß wird eine zweite Datenanforderung BW als eine zweite Datenwiederholungsfolge K2 aus einer vorgebbaren Anzahl an Ein- und Auswerten Z1G, Z0G im zweiten Pausenblock PP von der Gegenstelle DT,SLG kodiert, falls der mit den Datenblöcken B1-Bn empfangene Sicherungsblock CRC des Datenpaketes DP von einem auf gleiche Weise gebildeten Sicherungsblock verschieden ist.

Damit ist der Vorteil verbunden, dass ein in einer längeren Datensequenz DP übertragener Fehler FCRC am Ende mit sehr hoher Sicherheit erkannt wird, indem nur hier ein Fehlererkennungsverfahren mit sehr hoher Sicherheit verwendet wird, und unmittelbar dann eine Wiederholung der gesamten längeren Datensequenz DP veranlasst wird. Dabei kann vorteilhaft auch ein Übertragungsfehler ZF innerhalb eines Datenblockes B1-Bn erkannt werden, auch wenn ein übertragenes Sicherungsdatum SIG von einem in gleicher Weise von der Gegenstelle DT,SLG gebildeten Sicherungsdatum gleich ist. Ursache dafür kann z.B. ein Doppelfehler in der Übertragung eines Datenblocks B1-Bn sein.

Im Beispiel der Figur 5 weist die Datenwiederholungsfolge K2 vorteilhaft eine dreifach hintereinander folgende Z1G-, Z0G-,Z0G-Folge auf, welche keiner vorhergehenden Datenkodierung entspricht und vorteilhaft auch von der oben genannten Datenwiederholungsfolge K1 verschieden ist. Auch diese Folge K2 ist somit für die empfangende Gegenstelle DT,SLG einzigartig.

Schließlich kann zur Durchführung des erfindungsgemäßen Verfahrens ein Identifikationssystem IS mit einem Modulationsverfahren auf Basis des ISO/IEC 14443-Standards oder des ISO/IEC 15693-Standards in einem ISM-Frequenzband, insbesondere in einem ISM-Frequenzband von 13,56 MHz, betrieben werden. Zudem können in dem Identifikationssystem IS zwischen mindestens einem Schreib-/Lesegerät SLG und mindestens einem mobilen Datenspeicher Datenpakete DP über eine berührungslose Datenübertragungsstrecke LS ausgetauscht werden.

Dies ist insbesondere für eine Luftschnittstelle LS zur Kopplung zwischen Schreib-/Lesegerät SLG und mobilem Datenspeicher DT auf induktivem Wege vorteilhaft.

## Patentansprüche

1. Verfahren zur gesicherten Übertragung von Datenpaketen (DP) mit den folgenden Verfahrensschritten:
a) Einteilung der Datenpakete (DP) in je eine Folge von Datenblöcken (B1-Bn), Einteilung der Datenblöcke (B1-Bn) in je eine Folge von Daten (D1-Dn), wobei deren Kodierung ('0'-'F') durch je eine Folge (R1-Rn) aus einer vorgebbaren Anzahl an Ein- und Auswerten (Z1,Z0) repräsentiert wird,
b) Bildung je eines Sicherungsdatums (SIG) aus den vorangegangenen Daten (D1-Dn) und je eines Sicherungsblocks (CRC) aus den vorangegangenen Datenblöcken (B1-Bn),
c) Erzeugung einer ersten Datenanforderung (DW), falls das mit den Daten (D1-Dn) übertragene Sicherungsdatum (SIG) von einem beim Datenempfang auf gleiche Weise gebildeten Sicherungsdatum verschieden ist und
d) Erzeugung einer zweiten Datenanforderung (BW), falls der mit den Datenblöcken (B1-Bn) übertragene Sicherungsblock (CRC) von einem beim Datenempfang auf gleiche Weise gebildeten Sicherungsblock verschieden ist.

2. Verfahren nach Anspruch 1, wobei den Daten (D1-Dn) je ein erster Pausenblock (PS) und den Datenblöcken (B1-Bn) je ein zweiter Pausenblock (PP) folgt.

3. Verfahren nach Anspruch 1 oder 2, wobei ein Sicherungsdatum (SIG) wie ein Datum (D1-Dn) kodiert ('0'-'F') wird.

4. Verfahren nach einem der vorangegangenen Ansprüche, wobei ein Sicherungsblock (CRC) wie eine Folge von Daten (D1-Dn) mit Sicherungsblockdaten (CRC1-CRCn) gebildet wird.

5. Verfahren nach einem der vorangegangenen Ansprüche, wobei die erste Datenanforderung (DW) als eine erste Datenwiederholungsfolge (K1) aus einer vorgebbaren Anzahl an Ein- und Auswerten (Z1G,Z0G) im ersten Pausenblock (PS) kodiert wird.

6. Verfahren nach Anspruch 5, wobei die erste Datenwiederholungsfolge (K1) eine dreifach hintereinander folgende Folge aus einem Einwert (Z1G) und einem Auswert (Z0G) ist.

7. Verfahren nach einem der vorangegangenen Ansprüche, wobei die zweite Datenanforderung (BW) als eine zweite Datenwiederholungsfolge (K2) aus einer vorgebbaren Anzahl an Ein- und Auswerten (Z1G,Z0G) im zweiten Pausenblock (PP) kodiert wird.

8. Verfahren nach Anspruch 7, wobei die zweite Datenwiederholungsfolge (K2) eine dreifach hintereinander folgende Folge aus einem Einwert (Z1G) und zwei Auswerten (Z0G) ist.

9. Mobiler Datenspeicher (DT) zum berührungslosen gesicherten Austausch von Datenpaketen (DP) mit einem Schreib-/Lesegerät (SLG) das zugleich den mobilen Datenspeicher über eine Luftschniffstelle mit elektrischen Energie versorgt, mit einer Kodiereinrichtung (KE1) zur Durchführung des Verfahrens nach einem der vorangegangenen Ansprüche, wobei die Kodiereinrichtung (KE1) des mobilen Datenspeichers folgende Merkmale aufweist
a) erste Vergleichsmittel (VM1) zur Erzeugung einer ersten Datenanforderung (DW), falls das mit den Daten (D1-Dn) des Datenpakets (DP) empfangene Sicherungsdatum (SIG) von einem auf gleiche Weise gebildeten Sicherungsdatum verschieden ist,
b) zweite Vergleichsmittel (VM2) zur Erzeugung einer zweiten Datenanforderung (BW), falls der mit den Datenblöcken (B1-Bn) empfangene Sicherungsblock (CRC) des Datenpaktes (DP) von einem auf gleiche Weise gebildeten Sicherungsblock verschieden ist,
c) erste Abfragemittel (AM1), welche nach Erkennung einer ersten Datenanforderung (DW) die zuvor gesendeten Daten (D1-Dn) wiederholen, und
d) zweite Abfragemittel (AM2), welche nach Erkennung einer zweiten Datenanforderung (BW) die zuvor gesendeten Datenblöcke (B1-Bn) wiederholen.

10. Schreib-/Lesegerät (SLG) zum berührungslosen gesicherten Austausch von Datenpaketen (DP) mit einem mobilen Datenspeicher (DT), mit einer Kodiereinrichtung (KE2) zur Durchführung des Verfahrens nach einem der Ansprüche 1 bis 8, wobei die Kodiereinrichtung (KE2) des Schreib-/Lesegeräts folgende Merkmale aufweist
a) erste Vergleichsmittel (VM1) zur Erzeugung einer ersten Datenanforderung (DW), falls das mit den Daten (D1-Dn) des Datenpakets (DP) empfangene Sicherungsdatum (SIG) von einem auf gleiche Weise gebildeten Sicherungsdatum verschieden ist,
b) zweite Vergleichsmittel (VM2) zur Erzeugung einer zweiten Datenanforderung (BW), falls der mit den Datenblöcken (B1-Bn) empfangene Sicherungsblock (CRC) des Datenpaktes (DP) von einem auf gleiche Weise gebildeten Sicherungsblock verschieden ist,
c) erste Abfragemittel (AM1), welche nach Erkennung einer ersten Datenanforderung (DW) die zuvor gesendeten Daten (D1-Dn) wiederholen, und
d) zweite Abfragemittel (AM2), welche nach Erkennung einer zweiten Datenanforderung (BW) die zuvor gesendeten Datenblöcke (B1-Bn) wiederholen.

11. Identifikationssystem (IS) mit einem Schreib-/Lesegerät (SLG) nach Anspruch 10 und mindestens einem mobilen Datenspeicher (DT) nach Anspruch 9, welche über eine berührungslose Datenübertragungsstrecke (LS) Datenpakete (DP) austauschen.

## Claims

1. Method for protected transmission of data packets (DP) with the following steps:
a) dividing the data packets (DP) into a sequence of data blocks (B1-Bn), dividing the data blocks into a sequence of data (D1-Dn), wherein a coding for each data ('0'-'F') in said sequence of data is represented by a sequence (R1-Rn) of a predefined number of on and off values (Z1, Z0)
b) forming a protection datum (SIG) from the previous sequence of data (D1-Dn) and a protection block (CRC) from the previous data blocks (B1-Bn),
c) generating a first data request (DW) if the protection datum (SIG) transmitted together with the data (D1-Dn) differs from a protection datum formed in a same manner upon receipt of data, and
d) generating a second data request (BW) if the protection block (CRC) transmitted together with the data blocks (B1-Bn) differs from a protection block formed in a same manner upon receipt of data.

2. Method in accordance with claim 1, wherein the data (D1-Dn) is followed by a first pause block (PS), and the data blocks (B1-Bn) are followed by a second pause block (PP) in each case.

3. Method in accordance with claim 1 or 2, wherein a protection datum (SIG) is coded ('0'-'F') in the same manner as a datum (D1-Dn).

4. Method in accordance with one of the previous claims, wherein a protection block (CRC) is formed in a same manner as the sequence of data (D1-Dn) using protection block data (CRC1-CRCn).

5. Method in accordance with one of the previous claims, wherein the first data request (DW) is coded as a first data repeat sequence (K1) of a predefined number of on and off values (Z1G, Z0G) in the first pause block (PS).

6. Method in accordance with claim 5, wherein the first data repeat sequence (K1) is a triple consecutive sequence of an on value (Z1G) and an off value (Z0G).

7. Method in accordance with one of the previous claims, wherein the second data request (BW) is coded as a second data repeat sequence (K2) of a predefined number of on and off values (Z1G, Z0G) in the second pause block (PP).

8. Method in accordance with claim 7, wherein the second data repeat sequence (K2) is a triple consecutive sequence of an on value (Z1G) and two off values (Z0G).

9. Mobile data memory (DT) for the contactless protected exchange of data packets (DP) with a read-write device (SLG) which simultaneously supplies the mobile data memory with electrical energy over an air interface, having a coding device (KE1) for executing the method in accordance with one of the previous claims, wherein the coding device of the mobile data memory has the following features:
a) first comparison means (VM1) operable to generate a first data request (DW) if a protection datum (SIG) received together with data (D1-Dn) in the data packet (DP) differs from a protection datum formed in a same manner,
b) second comparison means (VM2) operable to generate a second data request (BW) if a protection block (CRC) of the data packet (DP) received together with data blocks (B1-Bn) differs from a protection block formed in a same manner,
c) first querying means (AM1) operable to repeat previously transmitted data (D1-Dn) after detection of a first data request (DW), and
d) second querying means (AM2) operable to repeat previously transmitted data blocks (B1-Bn) after detection of a second data request (BW).

10. Read-write device (SLG) for the contactless protected exchange of data packets (DP) with a second mobile data memory (DT), having a coding device (KE2) for executing the method in accordance with one of the claims 1 to 8, wherein the coding device of the read-write device has the following features:
a) first comparison means (VM1) operable to generate a first data request (DW) if a protection datum (SIG) received together with data (D1-Dn) in the data packet (DP) differs from a protection datum formed in a same manner,
b) second comparison means (VM2) operable to generate a second data request (BW) if a protection block (CRC) of the data packet (DP) received together with data blocks (B1-Bn) differs from a protection block formed in a same manner,
c) first querying means (AM1) operable to repeat previously transmitted data (D1-Dn) after detection of a first data request (DW), and
d) second querying means (AM2) operable to repeat previously transmitted data blocks (B1-Bn) after detection of a second data request (BW).

11. Identification system (IS) with a read-write device (SLG) in accordance with claim 10 and at least one mobile data memory (DT) in accordance with claim 9 which exchanges data packets (DP) over a contactless data transmission link (LS).

## Revendications

1. Procédé de transmission sécurisée de paquets de données (DP) avec les étapes de procédé suivantes :
a) division des paquets de données (DP) à chaque fois en une suite de blocs de données (B1 à Bn), division des blocs de données (B1 à Bn) à chaque fois en une suite de données (D1 à Dn), leur codage ("0" à "F") étant représenté à chaque fois par une suite (R1 à Rn) constituée d'un nombre pouvant être prescrit de valeurs marche et arrêt (Z1, Z0),
b) formation d'une donnée de sécurisation (SIG) à partir des données précédentes (D1 à Dn) et d'un bloc de sécurisation (CRC) à partir des blocs de données précédents (B1 à Bn),
c) production d'une première demande de données (DW) si la donnée de sécurisation (SIG) transmise avec les données (D1 à Dn) est différente d'une donnée de sécurisation formée de la même manière lors de la réception de données, et
d) production d'une deuxième demande de données (BW) si le bloc de sécurisation (CRC) transmis avec les blocs de données (B1 à Bn) est différent d'un bloc de sécurisation formé de la même manière lors de la réception de données.

2. Procédé selon la revendication 1, dans lequel les données (D1 à Dn) sont suivies d'un premier bloc de pause (PS) et les blocs de données (B1 à Bn) sont suivis d'un deuxième bloc de pause (PP).

3. Procédé selon la revendication 1 ou 2, dans lequel une donnée de sécurisation (SIG) est codée ("0" à "F") comme

4. Procédé selon l'une des revendications précédentes, dans lequel un bloc de sécurisation (CRC) est formé comme une suite de données (D1 à Dn) avec des données de bloc de sécurisation (CRC1 à CRCn).

5. Procédé selon l'une des revendications précédentes, dans lequel la première demande de données (DW) est codée comme une première suite de répétition de données (K1) constituée d'un nombre pouvant être prescrit de valeurs marche et arrêt (Z1G, Z0G) dans le premier bloc de pause (PS).

6. Procédé selon la revendication 5, dans lequel la première suite de répétition de données (K1) est une suite constituée d'une valeur marche (Z1G) et d'une valeur arrêt(Z0G) et répétée trois fois successivement.

7. Procédé selon l'une des revendications précédentes, dans lequel la deuxième demande (BW) est codée comme une deuxième suite de répétition de données (K2) constituée d'un nombre pouvant être prescrit de valeurs marche et arrêt (Z1G, Z0G) dans le deuxième bloc de pause (PP).

8. Procédé selon la revendication 7, dans lequel la deuxième suite de répétition de données (K2) est une suite constituée d'une valeur marche (Z1G) et de deux valeurs arrêt (Z0G) et répétée trois fois successivement.

9. Mémoire de données mobile (DT) destinée à l'échange sécurisé et sans contact de paquets de données (DP) avec un appareil d'écriture et de lecture (SLG), lequel alimente en même temps la mémoire de données mobile en énergie électrique par l'intermédiaire d'une interface radio, et comportant un dispositif de codage (KE1) pour la mise en oeuvre du procédé selon l'une des revendications précédentes, le dispositif de codage (KE1) de la mémoire de données mobile ayant les caractéristiques suivantes :
a) des premiers moyens de comparaison (VM1) pour la production d'une première demande de données (DW) si la donnée de sécurisation (SIG) reçue avec les données (D1 à Dn) du paquet de données (DP) est différente d'une donnée de sécurisation formée de la même manière,
b) des deuxièmes moyens (VM2) pour la production d'une deuxième demande de données (BW) si le bloc de sécurisation (CRC), reçu avec les blocs de données (B1 à Bn), du paquet de données (DP) est différent d'un bloc de sécurisation formé de la même manière,
c) des premiers moyens d'interrogation (AM1) qui, après la reconnaissance d'une première demande de données (DW), répètent les données (D1 à Dn) précédemment émises, et
d) des deuxièmes moyens d'interrogation (AM2) qui, après la reconnaissance d'une deuxième demande de données (BW), répètent les blocs de données (B1 à Bn) précédemment émis.

10. Appareil d'écriture et de lecture (SLG) destiné à l'échange sécurisé et sans contact de paquets de données (DP) avec une mémoire de données mobile (DT) et comportant un dispositif de codage (KE2) pour la mise en oeuvre du procédé selon l'une des revendications 1 à 8, le dispositif de codage (KE2) de l'appareil d'écriture et de lecture ayant les caractéristiques suivantes :
a) des premiers moyens de comparaison (VM1) pour la production d'une première demande de données (DW) si la donnée de sécurisation (SIG) reçue avec les données (D1 à Dn) du paquet de données (DP) est différente d'une donnée de sécurisation formée de la même manière,
b) des deuxièmes moyens (VM2) pour la production d'une deuxième demande de données (BW) si le bloc de sécurisation (CRC), reçu avec les blocs de données (B1 à Bn), du paquet de données (DP) est différent d'un bloc de sécurisation formé de la même manière,
c) des premiers moyens d'interrogation (AM1) qui, après la reconnaissance d'une première demande de données (DW), répètent les données (D1 à Dn) précédemment émises, et
d) des deuxièmes moyens d'interrogation (AM2) qui, après la reconnaissance d'une deuxième demande de données (BW), répètent les blocs de données (B1 à Bn) précédemment émis.

11. Système d'identification (IS) comportant un appareil d'écriture et de lecture (SLG) selon la revendication 10 et au moins une mémoire de données mobile (DT) selon la revendication 9 qui échangent des paquets de données (DP) par l'intermédiaire d'une voie de transmission de données (LS) sans contact.
